# EUROPEAN PATENT APPLICATION

(11) **EP 4 786 094 A1**
(43) Date of publication of application: **05.08.2026**
(21) Application number: 23954242.6
(22) Date of filing: 27.09.2023
(51) Int. Cl.: B23Q 17/09, B23Q 11/08

(54) **CUTTING SYSTEM, MACHINE TOOL, AND SHIELDING MEMBER**

(71) Applicant: Sumitomo Electric Industries, Ltd., Osaka-shi, Osaka 541-0041 (JP)
(72) Inventor: ARAKI, Tadashi, Osaka-shi, Osaka 541-0041 (JP); KURIYAMA, Hiromitsu, Osaka-shi, Osaka 541-0041 (JP); TANAKA, Yoshizo, Osaka-shi, Osaka 541-0041 (JP); OHMORI, Hiroki, Osaka-shi, Osaka 541-0041 (JP); KUWAYAMA, Ichiro, Osaka-shi, Osaka 541-0041 (JP); TAKANO, Toyohisa, Osaka-shi, Osaka 541-0041 (JP); YAMAGISHI, Suguru, Osaka-shi, Osaka 541-0041 (JP)
(74) Representative: Boult Wade Tennant LLP
(86) International application number: PCT/JP2023/035213
(87) International publication number: WO 2025/069266

(57) **Abstract**

A cutting system according to an embodiment of the present disclosure comprises: a cutting tool having a tool body that is disposed in a machining space of a machine tool, a sensor provided in the tool body, and a wireless communication unit that transmits an output of the sensor; a power supply device that wirelessly supplies power to the cutting tool in the machining space; and a shielding member that is attached to a window part of a cover defining the machining space. The shielding member comprises a shield for shielding radio waves radiated into the machining space, and a communication antenna for communicating with the wireless communication unit.

## Description

### TECHNICAL FIELD

The present disclosure relates to a cutting system, a machine tool, and a shielding member.

### BACKGROUND ART

PATENT LITERATURE 1 discloses a cutting tool including a body portion, a sensor unit disposed in the body portion, a wireless communication unit that transmits information indicating an output of the sensor to the outside, and a battery that supplies electric power to each unit. The battery is housed in a battery housing portion which is a space provided in the body portion. The cutting tool can monitor the state of the cutting tool during machining using a sensor and transmit the state to the outside.

### CITATION LIST

### [PATENT LITERATURE]

PATENT LITERATURE 1: International Publication No. WO 2022/230149

### SUMMARY OF THE INVENTION

A cutting system according to an embodiment of the present disclosure includes a cutting tool that is disposed in a machining space of a machine tool and includes a tool body, a sensor provided in the tool body, and a wireless communication unit to transmit an output of the sensor, a power supply device to wirelessly supply power to the cutting tool in the machining space, and a shielding member attached to a window portion of a cover defining the machining space. The shielding member includes a shielding body that shields a radio wave radiated into the machining space, and a communication antenna that communicates with the wireless communication unit.

### BRIEF DESCRIPTION OF DRAWINGS

[FIG. 1] FIG. 1 is a diagram illustrating an overall configuration of a cutting system according to an embodiment.
[FIG. 2] FIG. 2 is a block diagram illustrating an example of the configuration of a cutting tool.
[FIG. 3] FIG. 3 is a diagram illustrating an example of an appearance of a cover of a machine tool to which a shielding member is attached.
[FIG. 4] FIG. 4 is an enlarged view of a window portion.
[FIG. 5] FIG. 5 is a cross-sectional view taken along line A-A in FIG. 4.
[FIG. 6] FIG. 6 is a cross-sectional view of a shielding member according to a first modification of a first embodiment.
[FIG. 7] FIG. 7 is a cross-sectional view of a shielding member according to a second modification of the first embodiment.
[FIG. 8] FIG. 8 is a cross-sectional view of a shielding member according to a third modification of the first embodiment.
[FIG. 9] FIG. 9 is an enlarged view of a window portion according to a second embodiment;
[FIG. 10] FIG. 10 is a cross-sectional view taken along line B-B in FIG. 9.
[FIG. 11] FIG. 11 is an enlarged view of a window portion according to a third embodiment.
[FIG. 12] FIG. 12 is a cross-sectional view taken along line C-C in FIG. 11.

### DETAILED DESCRIPTION

### [Problems to be solved by present disclosure]

In the conventional cutting tool described above, when the electric power of the battery is consumed and exhausted, the battery is to be replaced with a new battery. In this case, an old battery is to be taken out from the battery housing portion and the new battery is to be installed, making it difficult to replace the battery during machining. Thus, when the machining time becomes long and the electric power of the battery is exhausted during the machining, it may become impossible to monitor the subsequent state of the cutting tool.

Thus, it is conceivable to wirelessly supply power to the sensor of the cutting tool. The wireless power supply to the sensor of the cutting tool makes it feasible to supply power to the cutting tool during machining, enabling continuous monitoring of the state of the cutting tool even during extended machining time.

Here, when wirelessly supplying power to the sensor, it is necessary to take measures to suppress leakage of a power supplying radio wave for wirelessly supplying power to the outside through, for example, a viewing window or the like of a cover defining the machining space. However, implementing measures to suppress the leakage of the power supplying radio wave to the outside through the viewing window or the like may also suppress leakage of a radio wave radiated by the wireless communication unit to the outside, thereby causing a failure in acquiring the output of the sensor from the outside of the machine tool. Thus, a technique is desired by which the output of the sensor can be acquired outside the machining space while the leakage of the radio wave to the outside of the machining space is suppressed.

### [Advantageous effects of present disclosure]

According to the present disclosure, the output of the sensor can be acquired outside the machining space while the leakage of the radio wave to the outside of the machining space is suppressed.

First, the contents of the embodiment will be listed and described.

### [Overview of embodiment]

(1) A cutting system according to an embodiment of the present disclosure includes a cutting tool that includes a tool body disposed in a machining space of a machine tool, a sensor provided in the tool body, and a wireless communication unit to transmit an output of the sensor, a power supply device to wirelessly supply power to the cutting tool in the machining space, and a shielding member attached to a window portion of a cover defining the machining space. The shielding member includes a shielding body that shields a radio wave radiated into the machining space, and a communication antenna that communicates with the wireless communication unit.

According to the above configuration, since the shielding member that is attached to the window portion and shields the radio wave is provided, the leakage of the radio wave through the window portion can be suppressed. In addition, the shielding member includes the communication antenna for communicating with the wireless communication unit, thereby enabling the transmission and reception of the radio wave between the communication antenna and the wireless communication unit provided in the machining space. As a result, the output of the sensor can be acquired outside the machine tool while the leakage of the radio wave to the outside of the machining space is suppressed.

(2) In the cutting system according to the above (1), the shielding body may have an opposing surface facing an outer surface of the window portion and an opening penetrating between the opposing surface and an opposite surface of the opposing surface. The shielding member may further include a case that closes the opening and is made of a material capable of shielding the radio wave. The case may include a holding member between the case and the outer surface of the window portion to hold the communication antenna. In this case, the window portion is exposed at the opening. The communication antenna is held between the case and the exposed portion of the window portion by the holding member. Accordingly, the communication antenna is arranged facing the window portion without the shielding body interposed therebetween. Thus, the radio wave transmitted and received between the communication antenna and the wireless communication unit is not shielded by the shielding body. Hence, the signal received by the communication antenna can be transmitted to the outside via a wired connection, and the output of the sensor can be acquired outside the machine tool. Furthermore, the case that closes the opening is made of a material capable of shielding the radio wave, thereby suppressing the leakage of the radio wave through the opening.
(3) In the cutting system according to the above (2), the shielding member may further include a substrate member having a laminated surface on which the shielding body is laminated. In this case, for example, even when the shielding body is sheet-like, the shielding body is held by the substrate member, facilitating handling of the shielding member.
(4) In the cutting system according to the above (1), the shielding body may have an opposing surface disposed facing an outer surface of the window portion. The communication antenna may be provided between the outer surface of the window portion and the opposing surface. In this case, the shielding body is not interposed between the communication antenna and the outer surface of the window portion. Thus, the radio wave transmitted and received between the communication antenna and the wireless communication unit is not shielded by the shielding body. Hence, the signal received by the communication antenna is transmitted to the outside via a wired connection, and the output of the sensor can be acquired outside the machine tool.
(5) In the cutting system according to any one of the above (1) to (4), the shielding body may include a radio wave absorber that absorbs radio waves of a predetermined frequency band. The predetermined frequency band may include a frequency band of a radio wave radiated by the power supply device. In this case, the radio wave from the power supply device is absorbed by the shielding body, suppressing leakage to the outside of the machining space. On the other hand, when the frequency band of the radio wave from the wireless communication unit is outside the predetermined frequency band, transmission and reception of the radio wave between the communication antenna and the wireless communication unit becomes possible. As a result, the output of the sensor can be acquired outside the machine tool while the leakage of the radio wave radiated by the power supply device to the outside of the machining space is suppressed.
(6) In the cutting system according to any one of the above (1) to (4), the shielding body may be formed of a conductive metal plate and has a monitoring window penetrating between the opposing surface and an opposite surface of the opposing surface. The shielding member may further include an opening/closing door that closes the monitoring window. In this case, the shielding body formed of a conductive metal plate does not have a see-through property. However, since the shielding body has a monitoring window that can be opened and closed by an opening/closing door, the inside of the machining space can be monitored from the window portion of the machine tool through the monitoring window as necessary.
(7) In the cutting system according to any one of the above (1) to (4), the shielding body may be formed of a conductive metal plate. The shielding member may further include an image capturing unit that captures an image of an inside of the machining space, and an output unit that outputs an image captured by the image capturing unit. In this case, the shielding body formed of a conductive metal plate does not have a see-through property. However, the inside of the machining space can be monitored from the outside by the image capturing unit and the output unit.
(8) An embodiment according to another aspect is a machine tool in which a cutting tool is used and a power supply device is provided to wirelessly supply power to the cutting tool. The cutting tool includes a tool body disposed in a machining space of the machine tool, a sensor provided in the tool body, and a wireless communication unit that transmits an output of the sensor. The machine tool includes a cover that defines the machining space and has a window portion, and a shielding member that is attached to the window portion. The shielding member includes a shielding body that shields a radio wave radiated into the machining space, and a communication antenna that communicates with the wireless communication unit.
(9) An embodiment according to still another aspect is a shielding member included in a machine tool in which a cutting tool is used and a power supply device is provided to wirelessly supply power to the cutting tool. The shielding member is to be attached to a widow portion of a cover defining a machining space. The cutting tool includes a tool body disposed in the machining space, a sensor provided in the tool body, and a wireless communication unit that transmits an output of the sensor. The shielding member includes a shielding body that shields a radio wave radiated into the machining space, and a communication antenna that communicates with the wireless communication unit.

### [Details of embodiment]

Hereinafter, preferred embodiments will be described with reference to the drawings. At least some of the embodiments described below may be combined as desired.

### [Overall configuration]

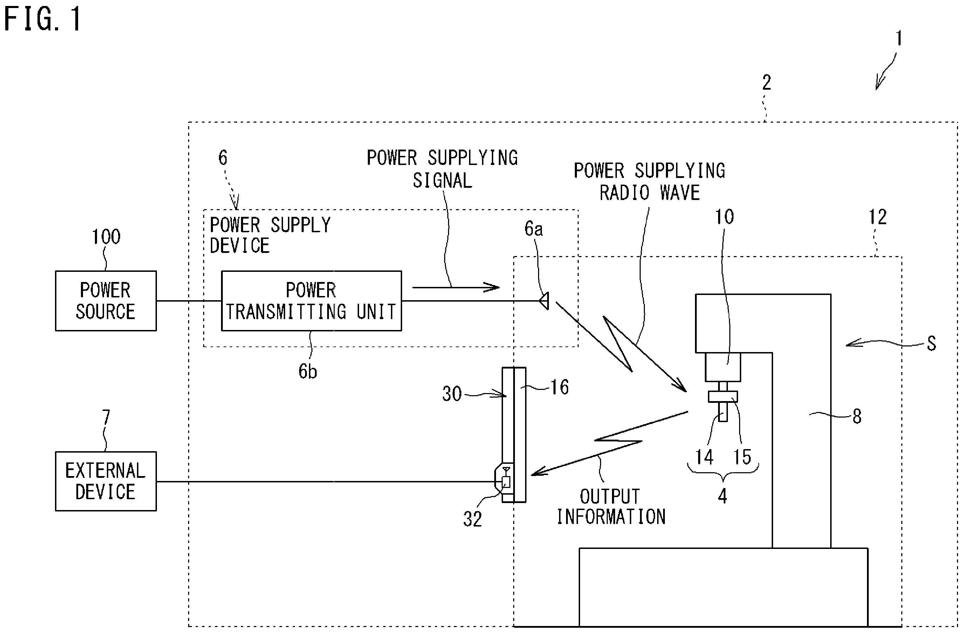

FIG. 1 is a diagram illustrating an overall configuration of a cutting system according to an embodiment. In FIG. 1, a cutting system 1 includes a machine tool 2, a cutting tool 4, a power supply device 6, and an external device 7.

The machine tool 2 is, for example, an NC milling machine. The machine tool 2 includes a column 8 and a spindle 10. The column 8 supports the spindle 10 above a table (not shown). The spindle 10 holds the cutting tool 4 with a chuck or the like. The spindle 10 is rotated by a motor about a rotation axis extending along a vertical direction.

The machine tool 2 rotates the spindle 10 to rotationally drive the cutting tool 4. A cutting insert is fixed to a lower end portion of the cutting tool 4. The workpiece fixed to the table is disposed at a machining position by the movement of the table, and the cutting machining is performed on the workpiece with the cutting tool 4. The cutting machining is performed within a machining space S of the machine tool 2. The cutting tool 4, the column 8, the spindle 10, the table, and the like are disposed within the machining space S. The machining space S is defined by a cover 12 made of metal, resin, or the like. That is, the machining space S is a space closed by the cover 12. During cutting machining, cutting oil (coolant) is supplied. In order to prevent the cutting oil from splattering, the cutting machining is performed within the closed machining space S.

The cutting tool 4 is a tool for performing cutting machining on a workpiece. More specifically, the cutting tool 4 is a tool for performing milling in cutting machining. Milling is a machining performed by pressing a tool against a fixed workpiece while rotating the tool.

The cutting tool 4 includes a rotary shaft 14 and a case 15. The rotary shaft 14 is a member that is held and rotationally driven by the spindle 10. The upper end portion of the rotary shaft 14 is held by the spindle 10. A cutting insert is provided at the lower end portion of the rotary shaft 14. That is, the rotary shaft 14 is a tool body of the cutting tool 4. The case 15 is an annular member and is integrally fixed to the rotary shaft 14. The case 15 houses a sensor therein. The sensor has a function of detecting a state of the cutting tool 4. The case 15 further houses a circuit that transmits output information indicating an output of the sensor to the outside and a circuit that receives electric power wirelessly supplied from the outside therein. The configuration of the cutting tool 4 will be described in detail later.

The power supply device 6 has a function of wirelessly supplying power to the cutting tool 4 within the machining space S. The power supply device 6 includes a power transmitting antenna 6a and a power transmitting unit 6b. The power transmitting unit 6b generates a power supplying signal based on electric power supplied by a power source 100, and provides the signal to the power transmitting antenna 6a. The power transmitting antenna 6a is fixed at a position where wireless power supply to the cutting tool 4 within the machining space S is possible. The power transmitting antenna 6a transmits the power supplying signal to the cutting tool 4 as a power supplying radio wave. The electric power transmitted by the power supply device 6 to the cutting tool 4 is used as electric power for operating the sensor and transmitting output information in the cutting tool 4.

The power supply device 6 of the present embodiment generates and transmits a signal of a frequency band including 5.7 GHz. That is, the power transmitting antenna 6a radiates a power supplying radio wave of a frequency band including 5.7 GHz. The frequency band of the power supplying radio wave radiated by the power supply device 6 is not particularly limited, but may be another frequency band permitted by law, such as a frequency band including 2.4 GHz, for example.

The external device 7 is a device disposed outside (the machining space S of) the machine tool 2. The external device 7 is provided with output information transmitted by the cutting tool 4. The external device 7 is configured by a computer or the like. The external device 7 includes a processing unit, a storage unit, an input/output unit, and the like. The external device 7 has a function of performing a process related to output information. The external device 7 extracts information indicating a detection result of the sensor from the output information, and stores the information in the storage unit or outputs the detection result to the outside via the input/output unit.

The cover 12 is provided with a window portion 16. A shielding member 30 is attached to the window portion 16. The shielding member 30 has a function of shielding a radio wave radiated into the machining space S. The shielding member 30 includes a communication device 32 that performs wireless communication with the cutting tool 4. The communication device 32 is connected to the external device 7 and can exchange information with the external device 7. The external device 7 can acquire output information from the cutting tool 4 and provide necessary information to the cutting tool 4, via the communication device 32.

### [Cutting tool]

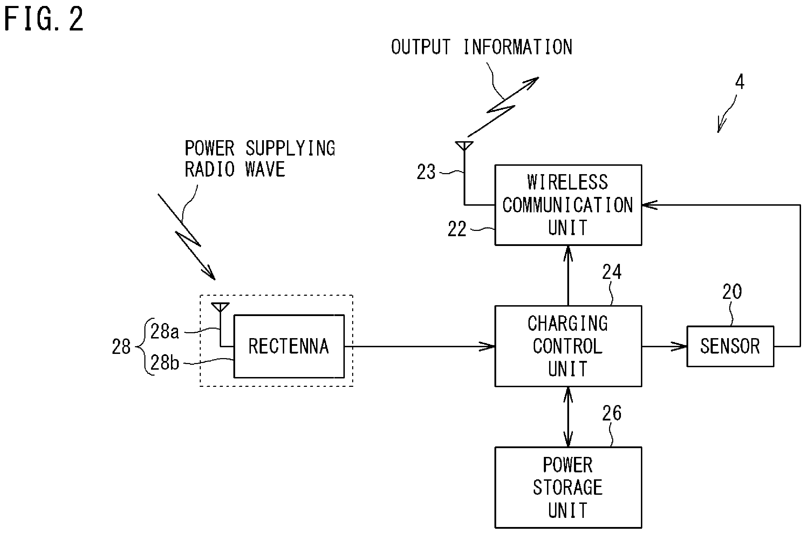

FIG. 2 is a block diagram illustrating an example of the configuration of the cutting tool 4. As shown in FIG. 2, the cutting tool 4 includes a sensor 20, a wireless communication unit 22, a charging control unit 24, a power storage unit 26, and a rectenna 28, in addition to the rotary shaft 14 and the case 15 described above. The sensor 20, the wireless communication unit 22, the charging control unit 24, the power storage unit 26, and the rectenna 28 are housed inside the case 15. The sensor 20, the wireless communication unit 22, the charging control unit 24, the power storage unit 26, and the rectenna 28 may be directly provided at the rotary shaft 14 or may be provided at the rotary shaft 14 with the case 15 interposed therebetween.

The rectenna 28 receives transmission electric power from the power transmitting antenna 6a of the power supply device 6. The rectenna 28 includes a power receiving antenna 28a and a rectifier circuit 28b. The power receiving antenna 28a receives the power supplying radio wave from the power supply device 6. The power receiving antenna 28a provides an electrical signal of the received radio wave to the rectifier circuit 28b. The rectifier circuit 28b rectifies the electric signal provided by the power receiving antenna 28a, converts the electric signal into DC electric power, and outputs the DC electric power. That is, the rectenna 28 constitutes a power receiving antenna circuit having a power receiving antenna 30a that receives the transmission electric power from the power transmitting antenna 6a. The DC electric power output by the rectifier circuit 28b is provided to the charging control unit 24.

The charging control unit 24 has a function of converting the DC electric power provided by the rectenna 28 into a predetermined voltage, controlling charging and discharging of the power storage unit 26, and providing the DC electric power from the rectenna 28 and the DC electric power from the power storage unit 26 to four sensors 20 and the wireless communication unit 22. In addition, in response to being provided with the DC electric power by the rectenna 28, the charging control unit 24 can provide the DC electric power only to the power storage unit 26. In this case, the sensors 20 and the wireless communication unit 22 are provided with DC electric power by the power storage unit 26. Furthermore, when the charging control unit 24 is not provided with the DC electric power by the rectenna 28, the charging control unit 24 can provide the DC electric power stored in the power storage unit 26 to the four sensors 20 and the wireless communication unit 22.

The power storage unit 26 includes, for example, a battery or a capacitor. The power storage unit 26 stores the DC electric power provided via the charging control unit 24. The power storage unit 26 discharges the stored electric power based on the control of the charging control unit 24.

The sensors 20 are sensors for detecting a state of the rotary shaft 14. More specifically, the sensors 20 include a strain sensor, a temperature sensor, an acceleration sensor, and the like. The sensors 20 have functions of detecting strain, temperature, and acceleration (vibration) which are the state of the rotary shaft 14. In response to being provided with the DC electric power by the charging control unit 24, the sensors 20 provide outputs indicating results of detecting the state of the rotary shaft 14 to the wireless communication unit 22.

The wireless communication unit 22 includes a communication antenna 23. The wireless communication unit 22 has a function of performing wireless communication with the communication device 32 via the communication antenna 23. The wireless communication unit 22 performs wireless communication with the communication device 32 by, for example, Bluetooth (registered trademark). Thus, the wireless communication unit 22 performs wireless communication using a frequency band including 2.4 GHz.

The wireless communication unit 22 wirelessly transmits the output provided by the sensors 20 as output information. In response to being provided with the DC electric power by the charging control unit 24, the wireless communication unit 22 establishes communication connection with the external device 7 and starts wireless transmission of the output information.

When cutting machining is performed using the cutting system 1, first, an operator of the system 1 mounts the cutting tool 4 to the spindle 10. Furthermore, the operator mounts a workpiece on the table of the machine tool 2. Thereafter, the operator closes the cover of the machine tool 2 to close the machining space S. The operator then causes the power supply device 6 to start the wireless power supply to the cutting tool 4. Thus, the cutting tool 4 receives the transmission electric power from the power supply device 6. In response to being provided with the electric power by the power supply device 6, the four sensors 20 of the cutting tool 4 start detecting the state of the rotary shaft 14 and outputting the detection results. Furthermore, the wireless communication unit 22 establishes a communication connection with the communication device 32 and starts wireless transmission of the output information. Thereafter, the operator causes the machine tool 2 to operate and start cutting machining.

In this case, the sensors 20 of the cutting tool 4 provide outputs indicating results of detecting the state of the cutting tool 4 to the wireless communication unit 22. The wireless communication unit 22 wirelessly transmits the outputs provided by the sensors 20 as output information. The output information transmitted by the wireless communication unit 22 is received by the communication device 32 and provided to the external device 7. The external device 7 to which the output information is provided acquires information indicating the state of the rotary shaft 14 from the output information. The external device 7 outputs the acquired information indicating the state of the rotary shaft 14. Thus, the external device 7 can output a machining state (a state of the cutting tool 4) during cutting machining to the operator. The operator can monitor the machining state during cutting machining by checking the output of the external device 7.

### [Shielding member in first embodiment]

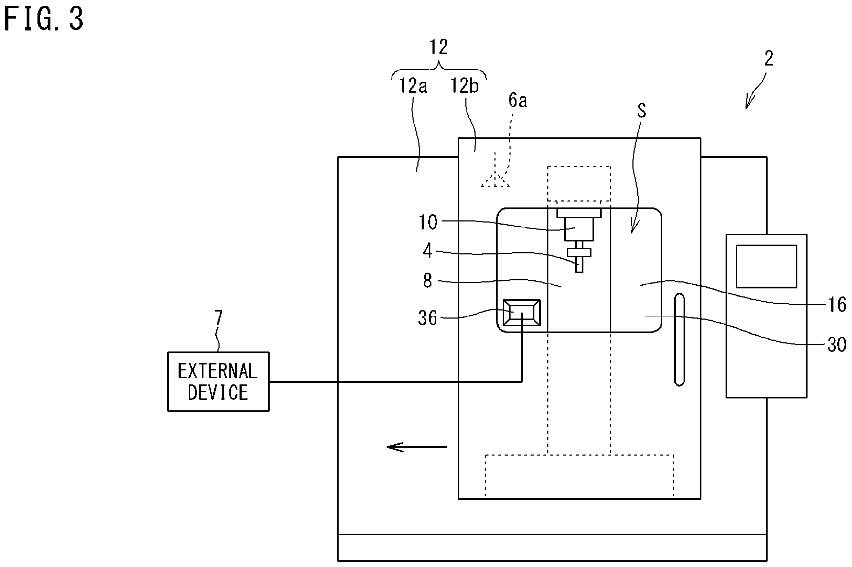

As described above, the cutting system 1 of the present embodiment includes the shielding member 30. FIG. 3 is a view illustrating an example of an appearance of the cover 12 of the machine tool 2 to which the shielding member 30 is attached. The cover 12 includes a cover body 12a and an opening/closing door 12b.

The cover body 12a houses the column 8, the spindle 10, and the cutting tool 4 therein. The opening/closing door 12b is provided at the cover body 12a so as to be slidable in a lateral direction as indicated by the arrow in FIG. 3. The opening/closing door 12b is in a closed state at the position shown in FIG. 3. The opening/closing door 12b moves from the position in the closed state in the lateral direction (toward a left side of the page in the figure) and becomes an open state. When the opening/closing door 12b is in the open state, each element disposed within the machining space S is exposed to the outside. When the operator prepares for machining or takes out a machined workpiece, the opening/closing door 12b is set to the open state. When the opening/closing door 12b is in the closed state, the machining space S is closed. Accordingly, the operator of the machine tool 2 is unable to access the machining space S. When the machine tool 2 is in machining, the opening/closing door 12b is set to the closed state.

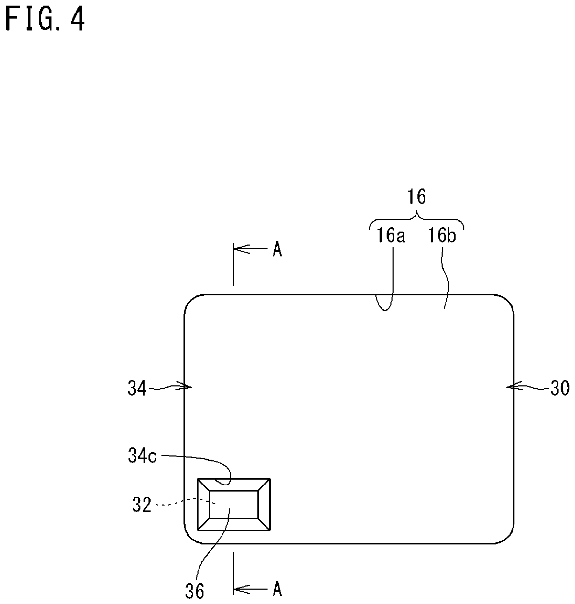

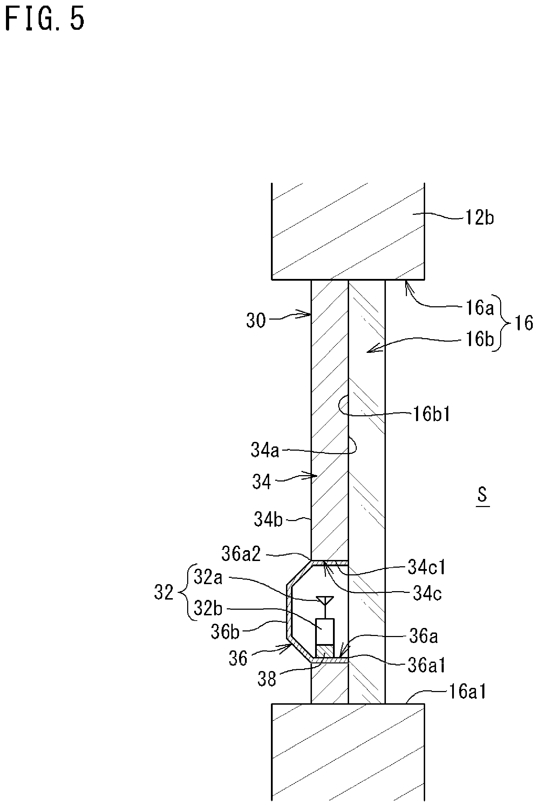

The window portion 16 is provided at the opening/closing door 12b. The window portion 16 is a viewing window for monitoring the inside of the machining space S from the outside of the cover 12. FIG. 4 is an enlarged view of the window portion 16. FIG. 5 is a cross-sectional view taken along line A-A in FIG. 4. The window portion 16 includes a window opening 16a and a window plate 16b. The window opening 16a is provided at the opening/closing door 12b. The window opening 16a is a rectangular opening that penetrates the inner surface and the outer surface of the opening/closing door 12b. The window plate 16b is a transparent plate member such as a glass plate or an acrylic plate, for example. The window plate 16b is fitted into and fixed to an edge surface 16a1 of the window opening 16a.

The shielding member 30 is attached to the window portion 16 as described above. The shielding member 30 includes a shielding body 34 and a case 36 in addition to the communication device 32 described above. As the shielding body 34, for example, a mesh sheet coated with a conductive metal and having a see-through property, a resin sheet including the mesh sheet, or the like is used. In this case, the shielding body 34 has a see-through property while shielding radio waves across a relatively wide frequency band. The shielding body 34 of the present embodiment shields a power supplying radio wave radiated by the power supply device 6 and a radio wave used in wireless communication between the wireless communication unit 22 and the communication device 32. Since the shielding body 34 has a see-through property as described above, the operator can monitor the inside of the machining space S through the shielding member 30 and the window portion 16.

The sheet-like shielding body 34 is laminated on an outer surface 16b1 of the window plate 16b. The shielding body 34 has an opposing surface 34a, an opposite surface 34b, and an opening 34c. The opposing surface 34a is a surface facing the outer surface 16b1 of the window portion 16. Accordingly, in a state in which the shielding member 30 is attached to the window portion 16, the opposing surface 34a faces the machining space S. The opposite surface 34b is a surface of the shielding body 34 opposite to the opposing surface 34a. The opening 34c is a portion that penetrates between the opposing surface 34a and the opposite surface 34b. In FIG. 5, the thickness of each part such as the shielding body 34 is exaggerated for ease of understanding.

The case 36 is made of a material capable of shielding radio waves, and closes the opening 34c. The material capable of shielding radio waves includes a conductive metal such as a steel plate or a copper plate. The case 36 closes the opening 34c, thereby suppressing the leakage of the radio wave within the machining space S to the outside through the opening 34c.

As illustrated in FIG. 5, the case 36 has a polygonal tube portion 36a and a lid portion 36b. The outer surface of the polygonal tube portion 36a has a rectangular shape corresponding to the shape of the opening 34c. Thus, the outer surface of the polygonal tube portion 36a is in contact with an edge surface 34c1 of the opening 34c. A first end portion 36a1 of the polygonal tube portion 36a is in contact with the outer surface 16b1 of the window plate 16b. A second end portion 36a2 of the polygonal tube portion 36a is closed by the lid portion 36b. The case 36 may be inserted into the opening 34c and held and fixed to the shielding body 34 by the edge surface 34c1. The case 36 may be fixed to the window plate 16b via an adhesive layer or the like.

The communication device 32 is disposed in a space provided between the case 36 and the outer surface 16b1. The communication device 32 includes a communication antenna 32a and a communication circuit 32b. The communication circuit 32b is connected to the external device 7 via a wired connection. The external device 7 exchanges transmission and reception signals with the communication circuit 32b. The communication antenna 32a radiates a transmission signal provided by the communication circuit 32b, receives a surrounding signal, and provides the received signal to the communication circuit 32b. As described above, the external device 7 can perform wireless communication via the communication device 32.

The case 36 further includes a holding member 38. The holding member 38 is a member for holding the communication device 32 inside the case 36. The holding member 38 is a member protruding from the inner surface of the case 36. The communication device 32 is fixed to the holding member 38 with a screw, an adhesive layer, or the like. Accordingly, the communication device 32 is held in a space provided between the case 36 and the outer surface 16b1.

According to the above configuration, since the shielding member 30 that is attached to the window portion 16 and shields the radio wave is provided, the leakage of the radio wave through the window portion 16 can be suppressed. In addition, the shielding member 30 includes the communication antenna 32a (communication device 32) for communicating with the wireless communication unit 22, thereby enabling the transmission and reception of the radio wave between the communication antenna 32a and the wireless communication unit 22 provided in the machining space S. As a result, the output of the sensor 20 can be acquired by the external device 7 located outside the machine tool 2 while the leakage of the radio wave to the outside of the machining space S through the window portion 16 is suppressed.

More specifically, in the present embodiment, the shielding body 34 has the opening 34c, and the case 36 closes the opening 34c and includes the holding member 38 that holds the communication device 32 between the case 36 and the outer surface 16b1 of the window portion 16. Accordingly, the outer surface 16b1 of the window portion 16 is exposed at the opening 34c. The communication antenna 32a is held between the case 36 and the exposed portion of the outer surface 16b1 by the holding member 38. Accordingly, the communication antenna 32a is disposed facing the outer surface 16b1 without the shielding body 34 interposed therebetween. Thus, the radio wave transmitted and received between the communication antenna 32a and the wireless communication unit 22 is not shielded by the shielding body 34. Hence, the signal received by the communication antenna 32a (communication device 32) can be transmitted to the outside via a wired connection, and the output of the sensor 20 can be acquired outside the machine tool 2. In addition, the case that closes the opening 34c is made of a material capable of shielding the radio wave, thereby suppressing the leakage of the radio wave through the opening 34c.

### [Modification of first embodiment]

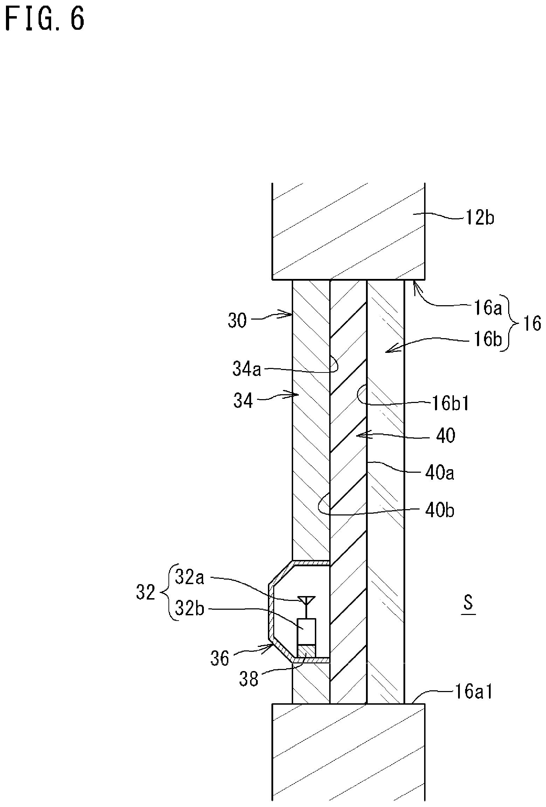

FIG. 6 is a cross-sectional view of the shielding member 30 according to a first modification of the first embodiment. The shielding member 30 of this modification is different from the above embodiment in that a substrate member 40 is provided on a side of the shielding member 30 closer the window plate 16b.

The substrate member 40 is a transparent plate material such as a glass plate or an acrylic plate, for example. The shielding body 34 is laminated on the substrate member 40. The substrate member 40 has a laminated surface 40b and an opposite surface 40a. The laminated surface 40b is a surface on which the shielding body 34 is laminated. The laminated surface 40b abuts against the opposing surface 34a of the shielding body 34. The opposite surface 40a is a surface of the substrate member 40 opposite the laminated surface 40b. The opposite surface 40a is laminated on the window plate 16b. Accordingly, in a state in which the shielding member 30 is attached to the window portion 16, the opposite surface 40a faces the machining space S. As described above, the shielding member 30 is laminated with the substrate member 40 and the shielding body 34 in this order from a side of the shielding member 30 closer to the window plate 16b.

The substrate member 40 may be laminated on the window plate 16b and fixed to the window plate 16b, or may be fitted into the edge surface 16a1 and fixed thereto. The case 36 may be fixed to the substrate member 40 via an adhesive layer or the like.

In this modification, since the shielding member 30 further includes the substrate member 40, even when the shielding body 34 is sheet-like, the shielding body 34 is held by the substrate member 40, facilitating handling of the shielding member 30.

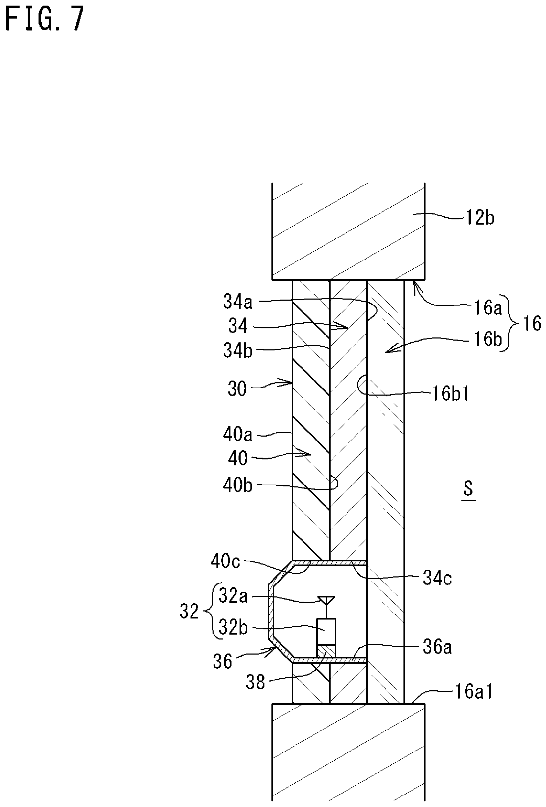

FIG. 7 is a cross-sectional view of the shielding member 30 according to a second modification of the first embodiment. The shielding member 30 of the present modification is different from the first modification in that the shielding member 30 is laminated with the shielding body 34 and the substrate member 40 in this order from a side of the shielding member 30 closer the window plate 16b. In this modification, the laminated surface 40b abuts against the opposite surface 34b of the shielding body 34. Thus, in a state in which the shielding member 30 is attached to the window portion 16, the laminated surface 40b faces the machining space S.

The substrate member 40 is provided with an opening 40c. The opening 40c is a portion that penetrates between the laminated surface 40b and the opposite surface 40a. The opening 40c is formed so as to match the shape of the opening 34c of the shielding body 34. Thus, the opening 34c and the opening 40c penetrate between the opposing surface 34a and the opposite surface 40a. The polygonal tube portion 36a of the case 36 is inserted into the opening 34c and the opening 40c. The case 36 is fixed to the substrate member 40 by being inserted into the opening 40c.

In this case, the substrate member 40 also facilitates handling of the shielding member 30. Furthermore, in this modification, the case 36 is inserted into the substrate member 40, thereby facilitating fixing of the case 36.

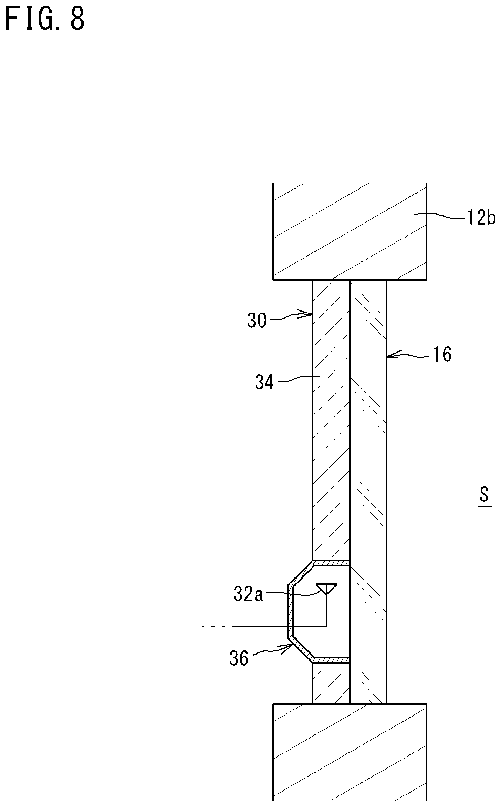

FIG. 8 is a cross-sectional view of the shielding member 30 according to a third modification of the first embodiment. The shielding member 30 of the present modification is different from the first embodiment in that the shielding member 30 includes the communication antenna 32a but does not include the communication circuit. In this case, the communication circuit is disposed outside the case 36, and the communication circuit and the communication antenna 32a are connected via a wired connection. Alternatively, the communication antenna 32a may be directly connected to the external device 7 via a wired connection, and the external device 7 may have a function of the communication circuit.

In the present embodiment and modifications, a mesh sheet coated with a conductive metal and having a see-through property is used as the shielding body 34. However, a radio wave absorber having a frequency selection function of absorbing a radio wave of a predetermined frequency band may be used as the shielding body 34. The radio wave absorber is a sheet-like member including a transparent dielectric sheet and a plurality of predetermined conductor patterns arranged on a surface of the dielectric sheet. The frequency band of the radio wave absorbed by the radio wave absorber is determined by the shapes of the plurality of conductor patterns and the like.

When the frequency band (predetermined frequency band) of the radio wave absorbed by the shielding body 34 includes the frequency band (predetermined frequency band including 5.7 GHz) of the power supplying radio wave radiated by the power supply device 6, the shielding body absorbs the power supplying radio wave radiated by the power supply device 6, suppressing leakage to the outside of the machining space S. On the other hand, since the frequency band of the radio wave of the wireless communication unit 22 is outside the predetermined frequency band, the radio wave can be transmitted and received between the communication antenna 32a and the wireless communication unit 22. As a result, the output of the sensor 20 can be acquired by the external device 7 while the leakage of the power supplying radio wave radiated by the power supply device 6 to the outside of the machining space S is suppressed. When a radio wave absorber having a frequency selection function is used for the shielding body 34, the opening 34c does not need to be provided in the shielding body 34, and the communication device 32 may be provided on a side of the shielding body 34 closer to the opposite surface 34b.

### [Shielding member in second embodiment]

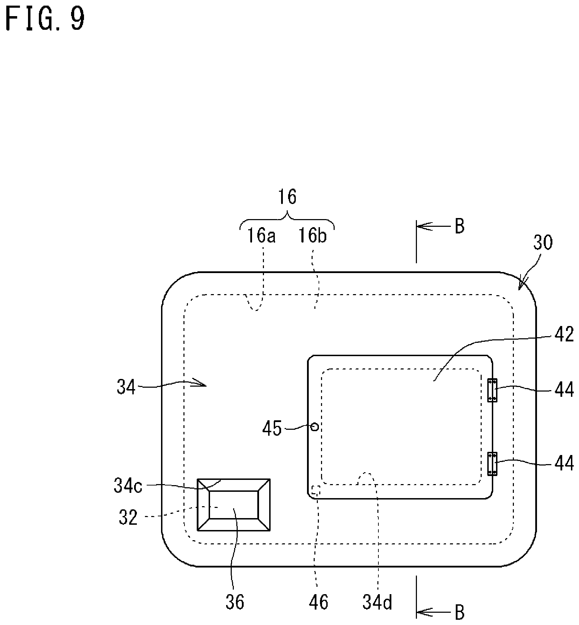

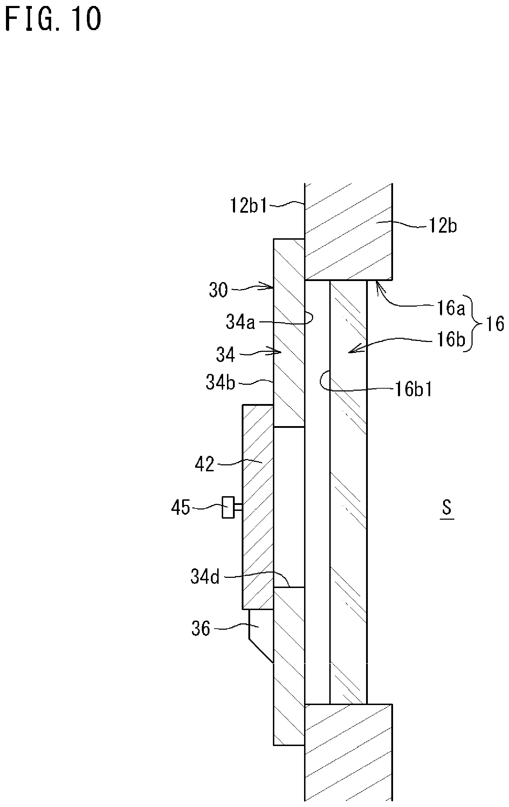

FIG. 9 is an enlarged view of the window portion 16 according to a second embodiment. FIG. 10 is a cross-sectional view taken along line B-B in FIG. 9. The present embodiment is different from the first embodiment in that the shielding body 34 is formed of a conductive metal plate.

The shielding body 34 of the present embodiment has a rectangular shape larger than the window opening 16a of the window portion 16. Thus, the shielding body 34 is fixed to the opening/closing door 12b in a state in which the edge portion of the shielding body 34 abuts against an edge portion of the window opening 16a in an outer surface 12b1 of the opening/closing door 12b. As a result, the shielding body 34 entirely closes the window opening 16a. The outer surface 16b1 of the window plate 16b and the opposing surface 34a of the shielding body 34 are spaced apart from each other. That is, a slight space is provided between the outer surface 16b1 and the opposing surface 34a.

As described above, the shielding body 34 is formed of a conductive metal plate such as a steel plate or a copper plate. Accordingly, the shielding body 34 of the present embodiment does not have a see-through property. Thus, the shielding body 34 is provided with a monitoring window 34d. The shielding member 30 further includes an opening/closing door 42. The monitoring window 34d is a rectangular opening. The monitoring window 34d penetrates between the opposing surface 34a and the opposite surface 34b. The opening/closing door 42 is formed of a conductive metal plate such as a steel plate or a copper plate as in the shielding body 34. The opening/closing door 42 has a rectangular shape larger than the monitoring window 34d. The opening/closing door 42 is provided in the shielding body 34 with a hinge portion 44 interposed therebetween. The opening/closing door 42 is provided in the shielding body 34 so as to entirely close the monitoring window 34d. The opening/closing door 42 is openable and closable by means of the hinge portion 44. The operator can hold a handle portion 45 to open and close the opening/closing door 42.

As shown in FIG. 9 and FIG. 10, when the opening/closing door 42 is closed, the edge portion of the opening/closing door 42 abuts against the edge portion of the monitoring window 34d in the shielding body 34. By opening the opening/closing door 42, the operator can access the window portion 16 through the monitoring window 34d.

As described above, in the present embodiment, the shielding body 34 is formed of a conductive metal plate and has the monitoring window 34d, and the shielding member 30 further includes the opening/closing door 42 that closes the monitoring window 34d. The shielding body 34 formed of a conductive metal plate does not have a see-through property. However, since the shielding body 34 has the monitoring window 34d that can be opened and closed by the opening/closing door 42, the operator can monitor the inside of the machining space S through the monitoring window 34d and the window portion 16 as necessary.

In the present embodiment, as shown in FIG. 9, a proximity switch 46 is provided at the edge portion of the monitoring window 34d in the shielding body 34. The proximity switch 46 is connected to the power transmitting unit 6b (FIG. 1) of the power supply device 6. The proximity switch 46 provides an output corresponding to the open/closed state of the opening/closing door 42 to the power transmitting unit 6b.

When the power transmitting unit 6b is providing a power supplying signal to the power transmitting antenna 6a, the power transmitting unit 6b continues to provide the power supplying signal to the power transmitting antenna 6a in response to receiving, from the proximity switch 46, an output indicating that the opening/closing door 42 is closed. On the other hand, when the power transmitting unit 6b is providing the power supplying signal to the power transmitting antenna 6a, the power transmitting unit 6b stops the generation of the power supplying signal or reduces an electric power of the signal to be lower than usual in response to receiving, from the proximity switch 46, an output indicating that the opening/closing door 42 is open. This allows suppression of the leakage of the radio wave through monitoring window 34d even when an operator opens the opening/closing door 42 during power supply.

### [Shielding member in third embodiment]

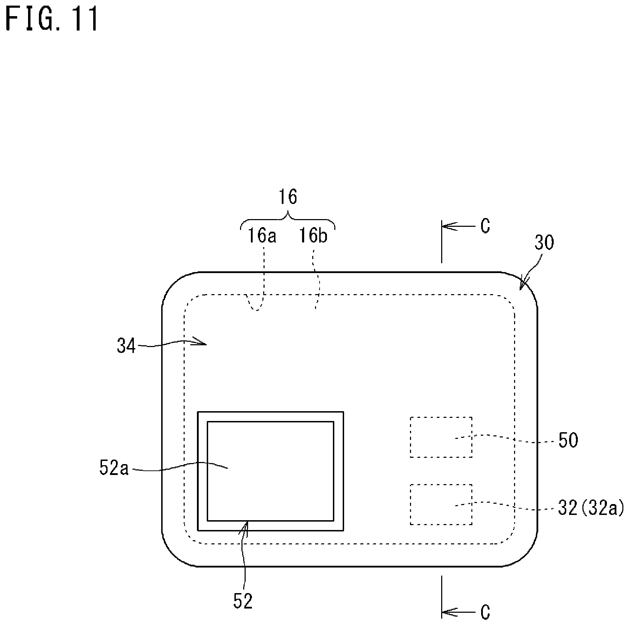

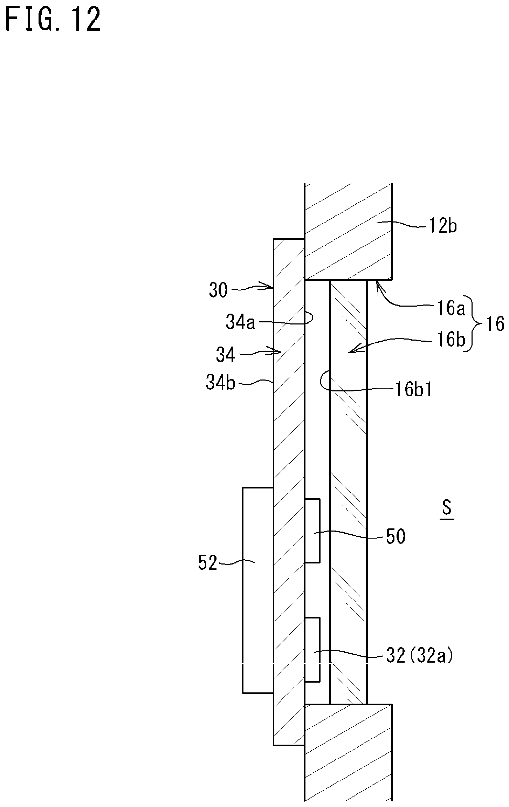

FIG. 11 is an enlarged view of the window portion 16 according to a third embodiment. FIG. 12 is a cross-sectional view taken along line C-C in FIG. 11. The present embodiment is different from the second embodiment in that the monitoring window 34d is not provided in the shielding body 34 and the shielding member 30 includes an image capturing unit 50 that captures an image of the inside of the machining space S.

The shielding member 30 of the present embodiment further includes an output unit 52 that outputs an image captured by the image capturing unit 50, in addition to the image capturing unit 50 described above. The image capturing unit 50 includes, for example, a digital camera having an imaging element such as a CCD element or a CMOS element, and an optical mechanism such as a lens. The image capturing unit 50 is fixed to the opposing surface 34a of the shielding body 34. Thus, the image capturing unit 50 is housed in a space between the opposing surface 34a and the outer surface 16b1. The image capturing unit 50 is fixed at a position facing the window portion 16, and can capture an image of the inside of the machining space S through the window portion 16. The image capturing unit 50 is connected to the output unit 52. The image capturing unit 50 provides the data of the captured moving image to the output unit 52.

The output unit 52 is a device including a screen 52a that outputs a moving image, such as a monitor or a touch panel. In response to receiving the data of the moving image from the image capturing unit 50, the output unit 52 outputs the received data of the moving image to the screen 52a as a moving image. In the present embodiment, the shielding body 34 formed of a conductive metal plate does not have a see-through property. However, the inside of the machining space S can be monitored from the outside using the image capturing unit 50 and the output unit 52.

In addition, the communication device 32 (communication antenna 32a) of the present embodiment is fixed to the opposing surface 34a together with the image capturing unit 50. Thus, the communication device 32 is housed in the space between the opposing surface 34a and the outer surface 16b1. The communication device 32 is connected to the external device 7 via a wired connection.

In this case, the shielding body 34 is not interposed between the communication device 32 (communication antenna 32a) and the outer surface 16b1 of the window portion 16. Thus, it is possible to suppress shielding of the radio wave transmitted and received between the communication device 32 and the wireless communication unit 22 (FIG. 2) by the shielding body.

### [Others]

It should be understood that the embodiments disclosed herein are merely illustrative and non-restrictive in every respect. In each of the above embodiments, the cutting tool 4 is a tool for milling machining, but the cutting tool 4 may be a tool for turning machining. The turning is a machining performed by pressing a tool against a rotating workpiece.

The scope of the present invention is defined by the claims, not in the sense described above, and is intended to include all modifications within the scope and meaning equivalent to the claims.

### REFERENCE SIGNS LIST

1 cutting system
2 machine tool
4 cutting tool
6 power supply device
6a power transmitting antenna
6b power transmitting unit
7 external device
8 column
10 spindle
12 cover
12a cover body
12b opening/closing door
12b1 outer surface
14 rotary shaft
15 case
16 window portion
16a window opening
16a1 edge surface
16b window plate
16b1 outer surface
20 sensor
22 wireless communication unit
23 communication antenna
24 charging control unit
26 power storage unit
28 rectenna
28a power receiving antenna
28b rectifier circuit
30 shielding member
30a power receiving antenna
32 communication device
32a communication antenna
32b communication circuit
34 shielding body
34a opposing surface
34b opposite surface
34c opening
34c1 edge surface
34d monitoring window
36 case
36a polygonal tube portion
36a1 first end portion
36a2 second end portion
36b lid portion
38 holding member
40 substrate member
40a opposite surface
40b laminated surface
40c opening
42 opening/closing door
44 hinge portion
45 handle portion
46 proximity switch
50 image capturing unit
52 output unit
52a screen
100 power source
S machining space

## Claims

1. A cutting system comprising:
a cutting tool including a tool body disposed in a machining space of a machine tool, a sensor provided in the tool body, and a wireless communication unit configured to transmit an output of the sensor;
a power supply device configured to wirelessly supply power to the cutting tool in the machining space; and
a shielding member configured to be attached to a window portion of a cover defining the machining space, wherein
the shielding member includes:
a shielding body configured to shield a radio wave radiated into the machining space; and
a communication antenna configured to communicate with the wireless communication unit.

2. The cutting system according to claim 1, wherein
the shielding body has:
an opposing surface facing an outer surface of the window portion; and
an opening penetrating between the opposing surface and an opposite surface of the opposing surface,
the shielding member further includes a case configured to close the opening, the case being made of a material capable of shielding the radio wave, and
the case includes a holding member between the case and the outer surface of the window portion to hold the communication antenna.

3. The cutting system according to claim 2, wherein
the shielding member further includes a substrate member having a laminated surface on which the shielding body is laminated.

4. The cutting system according to claim 1, wherein
the shielding body has an opposing surface disposed facing an outer surface of the window portion, and
the communication antenna is provided between the outer surface of the window portion and the opposing surface.

5. The cutting system according to any one of claims 1 to 4, wherein
the shielding body includes a radio wave absorber configured to absorb radio waves of a predetermined frequency band, and
the predetermined frequency band includes a frequency band of a radio wave radiated by the power supply device.

6. The cutting system according to any one of claims 1 to 4, wherein
the shielding body is formed of a conductive metal plate and has a monitoring window penetrating between the opposing surface and an opposite surface of the opposing surface, and
the shielding member further includes an opening/closing door configured to close the monitoring window.

7. The cutting system according to any one of claims 1 to 4, wherein
the shielding body is formed of a conductive metal plate, and
the shielding member further includes:
an image capturing unit configured to capture an image of an inside of the machining space; and
an output unit configured to output an image captured by the image capturing unit.

8. A machine tool in which a cutting tool is used and a power supply device is provided to wirelessly supply power to the cutting tool, the cutting tool including a tool body disposed in a machining space of the machine tool, a sensor provided in the tool body, and a wireless communication unit configured to transmit an output of the sensor, the machine tool comprising:
a cover defining the machining space and including a window portion; and
a shielding member configured to be attached to the window portion, wherein
the shielding member includes:
a shielding body configured to shield a radio wave radiated into the machining space; and
a communication antenna configured to communicate with the wireless communication unit.

9. A shielding member included in a machine tool in which a cutting tool is used and a power supply device is provided to wirelessly supply power to the cutting tool, the cutting tool including a tool body disposed in a machining space of the machine tool, a sensor provided in the tool body, and a wireless communication unit configured to transmit an output of the sensor, the shielding member being to be attached to a window portion of a cover defining the machining space, the shielding member comprising:
a shielding body configured to shield a radio wave radiated into the machining space; and
a communication antenna configured to communicate with the wireless communication unit.
